# EUROPÄISCHE PATENTSCHRIFT

(11) **EP 0 742 499 B1**
(45) Veröffentlichungstag und Bekanntmachung des Hinweises auf die Patenterteilung: **05.09.2001**
(21) Anmeldenummer: 96107438.2
(22) Anmeldetag: 10.05.1996
(51) Int. Cl.: G05B 19/042, G05B 19/4063

(54) **Sicheres Verarbeiten von sicherheitsgerichteten Prozesssignalen**
Reliable processing of safety-oriented process signals
Traitement fiable de signaux orientés sûreté

(30) Priorität: 11.05.1995 DE 19517377
(43) Veröffentlichungstag der Anmeldung: 13.11.1996
(73) Patentinhaber: SIEMENS AKTIENGESELLSCHAFT, 80333 München (DE)
(72) Erfinder: Hertinger, Klaus, Ing. (FH),, 91056 Erlangen (DE); Hauf, Ronald, Dipl.-Ing.,, 91096 Möhrendorf, (DE); Schmittele, Max, Dipl.-Ing.,, 91058 Erlangen (DE); Brune, Richard, Dipl.-Ing.,, 90765 Fürth (DE); Schick,Ludwig, 91091 Grossenseebach (DE); Schleicher, Siegfried, Dr.-Ing.,, 09113 Chemnitz (DE)

(56) Entgegenhaltungen:
- EP-A- 0 399 308
- EP-A- 0 404 992
- EP-A- 0 631 673
- DE-A- 3 225 455
- DE-A- 3 718 582
- DE-A- 3 902 247
- FR-A- 2 561 410
- US-A- 5 067 080

## Beschreibung

Die Erfindung betrifft ein Verfahren sowie eine Schaltungsanordnung zum sicheren Verarbeiten von sicherheitsgerichteten Prozeßsignalen.

Im Umfeld jeder Automatisierungsanlage befinden sich sicherheitsrelevante Schaltkreise, die für den Schutz von Personen notwendig und vorgeschrieben sind. In Normen wird je nach Gefahrenklasse eine bestimmte Sicherheitskategorie vorgeschrieben. So ist beispielsweise für Werkzeugmaschinen, Roboter und Sondermaschinen eine Sicherheitskategorie vorgesehen, welche die sogenannte "Einfehlersicherheit" vorschreibt. Das bedeutet, daß das Auftreten eines einzelnen Fehlers die Schutzeinrichtungen nicht außer Kraft setzen kann.

Herkömmlicherweise werden für den Einrichtebetrieb oder allgemein für Betriebszustände, in denen Personen Gefahren durch Prozesse von Automatisierungsanlagen ausgesetzt sind, entsprechende externe Überwachungsgeräte und Sicherheitsschaltkreise vorgesehen. Diese sind beispielsweise Anwahleinrichtungen, wie z.B. Lichtschranken oder Trittmatten, entsprechende Auswerte- und Vorgabeschaltkreise, wie z.B. Drehzahlüberwachungsgeräte, oder auch Schaltkreise zur Auslösung, wie z.B. Türentriegelung, Verfahren mit Zustimmung usw. Hinzu kommen Schaltkreise zur Abschaltung, wie z.B. Reglersperren, eine Impulslöschung, Bremsenansteuerung, Not-Aus etc.

Solche externe Überwachungsgeräte mit Sicherheitsschaltkreisen besitzen jedoch den Nachteil, daß sie sehr kostenintensiv und mit extrem hohem Verdrahtungsaufwand verbunden sind. Hinzu kommt, daß auch solche sicherheitsrelevante externe Einheiten selbst fehleranfällig sind, was zur Folge hat, daß beispielsweise zur Realisierung einer "Einfehlersicherheit" eine Vielzahl solcher externer Überwachungsgeräte eingesetzt werden muß. Dadurch steigen die Kosten und parallel dazu auch der erforderliche Verdrahtungsaufwand.

Bei Anlagen der Datenverarbeitung ist der prinzipielle Betrieb von mehreren Rechnern bekannt, deren Daten miteinander kreuzweise verglichen werden. Eine explizite Ausprägung für sicherheitsgerichtete Prozeßsignale liegt dabei allerdings nicht vor (EP 0 399 308 A2).

Aufgabe der vorliegenden Erfindung ist es daher, solcher obengenannten externen Überwachungsgeräte und Sicherheitsschaltkreise, die mit jeder Maschinenausrüstung notwendig sind, zu ersetzen und sicherheitsrelevante Funktionen und Schaltkreise so zu integrieren, daß bisher extern aufgebaute Überwachungsgeräte und kontaktbehaftete Relais- und Schütztechnik auf ein Minimum reduziert werden oder gar wegfallen kann. Dennoch soll ein Personenschutz nach der Sicherheitskategorie "Einfehlersicherheit" gewährleistet sein. Über eine Verbindung zum Prozeß über sicherheitsgerichtete Signale soll eine Anwahl von sicheren Überwachungsfunktionen aus dem Prozeß, die Ausgabe bzw. Weitergabe von Zuständen der Überwachungsfunktion zum Prozeß sowie eine Verknüpfung von sicherheitsgerichteten Signalen für den Prozeß ermöglicht werden.

Gemäß der vorliegenden Erfindung wird diese Aufgabe durch ein Verfahren mit den folgenden Verfahrensschritten gelöst:
1.1 die Prozeßsignale werden unabhängig an mindestens zwei ebenfalls unabhängige Rechner geführt, welche so mindestens zwei Überwachungskanäle bilden,
1.2 in mindestens zwei Rechnern werden die Prozeßsignale einer separaten projektierbaren Eingangssignalverarbeitung unterzogen, wobei diese Rechner einen kreuzweisen Ergebnisvergleich und Datenvergleich durchführen, wobei unter dem Begriff "projektierbar" hier und im folgenden zitierten Wortlaut der Ansprüche eine flexible Anpaßbarkeit an die jeweilige Applikation bzw. den jeweils zugrundeliegenden Prozeß durch individuelle Programmierung der beteiligten Rechner subsummiert ist,
1.3 die durch die Eingangssignalverarbeitung gebildeten Signale werden in den Überwachungskanälen interpretiert und den jeweiligen Prozeßzustand berücksichtigende Ausgangssignale werden generiert, wobei zwischen jeweils zwei Überwachungskanälen ein kreuzweiser Ergebnisvergleich und Datenvergleich durchgeführt wird,
1.4 in mindestens zwei Rechnern werden die generierten Ausgangssignale einer separaten projektierbaren Ausgangssignalverarbeitung unterzogen, wobei diese Rechner ebenfalls einen kreuzweisen Ergebnisvergleich und Datenvergleich durchführen,
1.5 mit den erhaltenen sicheren Ausgangssignalen der mindestens zwei Überwachungskanäle werden sicherheitsrelevante Parameter des Prozesses redundant angesteuert.

In einer ersten vorteilhaften Ausgestaltung des Verfahrens gemäß der vorliegenden Erfindung wird erreicht, daß der Aufwand für die Eingangs- und Ausgangssignalverarbeitung erheblich reduziert werden kann. Dies geschieht durch folgenden weiteren Verfahrensschritt:
2.1 die projektierbare Eingangs- und Ausgangssignalverarbeitung wird jeweils in einem gemeinsamen Rechner durchgeführt.

In einer weiteren vorteilhaften Ausgestaltung des Verfahrens gemäß der vorliegenden Erfindung wird dieses im Hinblick auf einen Einsatz in numerisch gesteuerten Werkzeugmaschinen, Robotern oder dergleichen optimiert, wobei sicherheitsrelevante Funktionen eines Bearbeitungsprozesses in vorhandene Komponenten beispielsweise der Werkzeugmaschine integriert werden können. Eine solche Komponente ist insbesondere die numerische Steuerung selbst. Dies wird durch folgende Verfahrensschritte erreicht:
3.1 die Prozeßsignale werden unabhängig zweikanalig an zwei ebenfalls unabhängige Rechner der numerischen Steuerung geführt,
3.2 in beiden Rechnern werden die Prozeßsignale einer separaten projektierbaren Eingangssignalverarbeitung unterzogen, wobei diese Rechner einen kreuzweisen Ergebnisvergleich und Datenvergleich durchführen,
3.3 die durch die Eingangssignalverarbeitung gebildeten Signale werden in zwei unabhängigen Überwachungskanälen interpretiert, welche jeweils durch einen Rechner der numerischen Steuerung und den Rechner eines am Prozeß beteiligten Antriebes gebildet werden, wobei eine Datenverbindung zwischen dem anderen Rechner der numerischen Steuerung und dem Rechner des Antriebes besteht.
3.4 zwischen den beiden Überwachungskanälen wird ein kreuzweiser Ergebnisvergleich und Datenvergleich durchgeführt und den jeweiligen Prozeßzustand berücksichtigende Ausgangssignale werden generiert,
3.5 in den beiden Rechnern der numerischen Steuerung werden die generierten Ausgangssignale einer separaten projektierbaren Ausgangssignalverarbeitung unterzogen, wobei diese beiden Rechner ebenfalls einen kreuzweisen Ergebnisvergleich und Datenvergleich durchführen,
3.6 mit den erhaltenen sicheren Ausgangssignalen der zwei Überwachungskanäle werden sicherheitsrelevante Parameter des Prozesses redundant angesteuert.

Um das im vorangehende geschilderte Verfahren gemäß der vorliegenden Erfindung mit den damit verbundenen vorteilhaften Auswirkungen auf einfache Art und Weise durchführen zu können, wird eine Schaltungsanordnung geschaffen, welche folgende Merkmale aufweist:
4.1 es sind mindestens zwei Rechner vorgesehen, welchen die Prozeßsignale zuführbar sind und welche mindestens zwei Überwachungskanäle bilden,
4.2 in mindestens zwei Rechnern sind separate projektierbare Eingangssignalverarbeitungseinheiten für die Prozeßsignale vorgesehen, wobei zwischen diesen Rechnern Mittel zur Durchführung eines kreuzweisen Ergebnisvergleichs und Datenvergleichs vorgesehen sind,
4.3 die durch die Eingangssignalverarbeitungseinheiten gebildeten Signale sind in den Überwachungskanälen interpretierbar und es sind Mittel zur Generierung von den jeweiligen Prozeßzustand berücksichtigenden Ausgangssignalen vorgesehen, wobei zwischen jeweils zwei Überwachungskanälen ebenfalls Mittel zur Durchführung eines kreuzweisen Ergebnisvergleichs und Datenvergleichs vorgesehen sind,
4.4 in mindestens zwei Rechnern sind separate projektierbare Ausgangssignalverarbeitungseinheiten zur Verarbeitung der generierten Ausgangssignale vorgesehen, wobei zwischen diesen Rechnern ebenfalls Mittel zur Durchführung eines kreuzweisen Ergebnisvergleichs und Datenvergleichs vorgesehen sind,
4.5 es sind Mittel zur redundanten Ansteuerung sicherheitsrelevanter Parameter des Prozesses mit den erhaltenen sicheren Ausgangssignalen der mindestens zwei Überwachungskanäle vorgesehen.

In einer ersten vorteilhaften Ausgestaltung der Schaltungsanordnung gemäß der vorliegenden Erfindung wird erreicht, daß bereits in einer numerischen Steuerung vorgesehene Rechnereinheiten so ausgestaltet werden, daß diese eine Eingangs- und zugleich Ausgangssignalverarbeitung durchführen können. Dies geschieht durch folgendes weiteres Merkmal:
5.1 die projektierbaren Eingangs- und Ausgangssignalverarbeitungseinheiten sind jeweils in einem gemeinsamen Rechner angeordnet.

In einer weiteren vorteilhaften Ausgestaltung der Schaltungsanordnung gemäß der vorliegenden Erfindung wird eine solche Schaltungsanordnung geschaffen, welche speziell im Hinblick auf den Einsatz in numerisch gesteuerten Werkzeugmaschinen, Robotern oder dergleichen optimiert ist. Diese weist insbesondere für den genannten Einsatzbereich die im vorangehenden bereits geschilderten Vorteile auf. Dabei wird es ermöglicht, daß bereits vorhandene Komponente beispielsweise einer Werkzeugmaschine oder eines Roboters zum sicheren Verarbeiten von sicherheitsrelevanten Signalen eines Bearbeitungsprozesses eingesetzt werden können. Eine solche Komponente ist dabei insbesondere eine numerische Steuerungseinheit. Diese Schaltungsanordnung besitzt die folgenden Merkmale:
6.1 es sind zwei unabhängige Rechner der numerischen Steuerung vorgesehen, denen die Prozeßsignale unabhängig zweikanalig zuführbar sind,
6.2 in beiden Rechnern zur Verarbeitung der Prozeßsignale sind separate projektierbare Eingangssignalverarbeitungseinheiten vorgesehen, wobei zwischen diesen beiden Rechnern weitere Mittel zur Durchführung eines kreuzweisen Ergebnisvergleichs und Datenvergleichs vorgesehen sind,
6.3 die durch die Eingangssignalverarbeitungseinheiten gebildeten Signale sind in zwei unabhängigen Überwachungskanälen interpretierbar, welche jeweils durch einen Rechner der numerischen Steuerung und den Rechner eines am Prozeß beteiligten Antriebes realisiert sind, wobei eine Datenverbindung zwischen dem anderen Rechner der numerischen Steuerung und dem Rechner des Antriebes vorgesehen ist.
6.4 es sind Mittel zur Durchführung eines kreuzweisen Ergebnisvergleichs und Datenvergleichs zwischen den beiden Überwachungskanälen und Mittel zur Generierung von den jeweiligen Prozeßzustand berücksichtigenden Ausgangssignalen vorgesehen,
6.5 in den beiden Rechnern der numerischen Steuerung sind zur Verarbeitung der generierten Ausgangssignale separate projektierbare Ausgangssignalverarbeitungseinheiten vorgesehen, wobei zwischen beiden Rechnern ebenfalls Mittel zur Durchführung einen kreuzweisen Ergebnisvergleichs und Datenvergleichs vorgesehen sind,
6.6 es sind Mittel zur redundanten Ansteuerung sicherheitsrelevanter Parameter des Prozesses mit den erhaltenen sicheren Ausgangssignalen der zwei Überwachungskanäle vorgesehen.

Weitere Vorteile und erfinderische Einzelheiten ergeben sich aus der nachfolgenden Beschreibung der Erfindung sowie den dazugehörigen Ausführungsbeispielen, den Unteransprüchen und in Verbindung mit der Figur. Es zeigt:

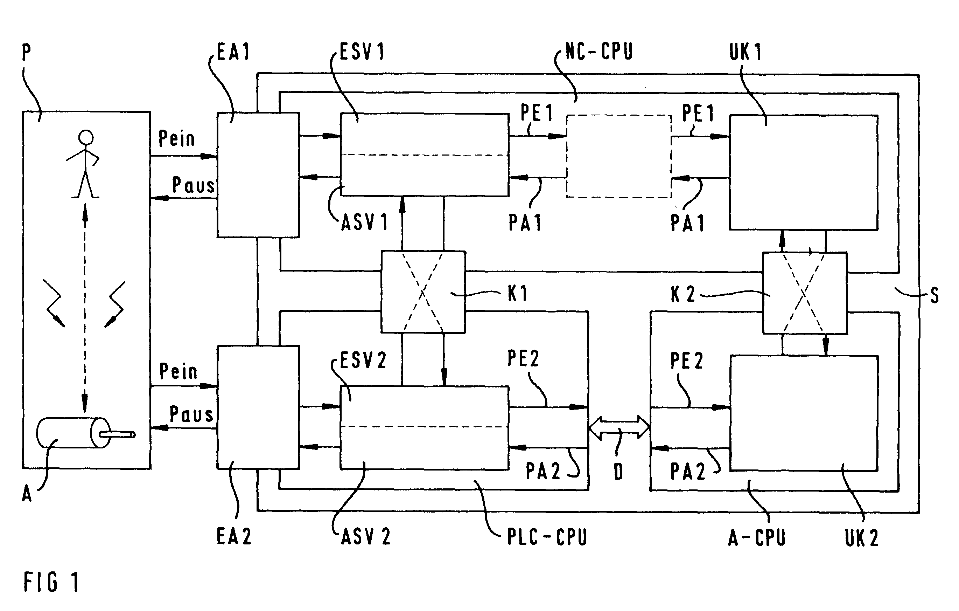

FIG 1 eine Schaltungsanordnung zur sicheren zweikanaligen Überwachung und Signalverarbeitung sicherheitsrelevanter Signale.

In der Darstellung gemäß FIG 1 ist eine Schaltungsanordnung zur sicheren zweikanaligen Überwachung und Signalverarbeitung von sicherheitsgerichteten Prozeßsignalen gezeigt, welche unter anderem das Kriterium der "Einfehlersicherheit" erfüllt. Zwar ist das Ausführungsbeispiel gemäß der Darstellung nach FIG 1 anhand einer zweikanaligen Struktur erläutert, jedoch sind die dazu erforderlichen Maßnahmen auch auf beliebig höherkanalige Strukturen übertragbar. Der besseren Verständlichkeit halber jedoch soll das konkrete Ausführungsbeispiel anhand einer zweikanaligen Überwachung und Signalverarbeitung sicherheitsgerichteter Prozeßsignale erfolgen.

Ein beliebiger sicherheitsrelevanter Prozeß P liefert sicherheitsgerichtete Prozeßeingangssignale Pein. Diese werden über zwei unabhängige Eingabe-/Ausgabebausteine EA1 und EA2 redundant zur numerischen Steuerung S geführt. Diese numerische Steuerung S weist einen Rechner zur numerischen Steuerung NC-CPU sowie einen weiteren Rechner PLC-CPU auf, wobei letzterer eine programmierbare Kontrollogik darstellt. Desweiteren weist die numerische Steuerung S einen Antriebs-Rechner A-CPU auf, welcher einen am Prozeß P beteiligten Antrieb A ansteuert. Mit diesen drei Rechnern ist eine zweikanalige Überwachungsstruktur realisiert, indem die bereits erwähnten sicherheitsgerichteten Prozeßeingangssignale Pein über die ebenfalls bereits beschriebenen Eingabe-/Ausgabebausteine redundant zum einen an den Rechner NC-CPU und unabhängig davon auch an den zweiten Rechner der numerischen Steuerung PLC-CPU geführt werden. In den beiden genannten Rechnern NC-CPU und PLC-CPU sind jeweils Einheiten ESV1 und ESV2 zur Eingangssignalverarbeitung der sicherheitsgerichteten Prozeßeingangssignale vorgesehen. Diese können beispielsweise durch eine geeignete Programmierung in den beiden genannten Rechnern realisiert werden. Durch die jeweilige Eingangssignalverarbeitung ESV1 und ESV2, welche unabhängig voneinander durch die beiden Rechner NC-CPU und PLC-CPU durchgeführt wird, erhält man für die interne Weiterverarbeitung Eingangssignale PE1 und PE2.

Zur Erhöhung der Sicherheit werden zwischen beiden unabhängigen Eingangssignalverarbeitungseinheiten ESV1 und ESV2 Maßnahmen zum kreuzweisen Ergebnisvergleich und Datenvergleich zwischen den beiden Rechnern NC-CPU und PLC-CPU der numerischen Steuerung S getroffen. Über eine entsprechende Funktionseinheit K1 sind die beiden genannten Rechner miteinander verkoppelt, wodurch ein entsprechender Ergebnis- und Datenvergleich ermöglicht wird. Die so verifizierten und verarbeiteten Eingangssignale PE1 und PE2 werden nun unabhängig zwei Überwachungskanälen UK1 und UK2 zugeleitet. Ein solcher Überwachungskanal UK1 ist ebenfalls mit Hilfe des einen Rechners NC-CPU der numerischen Steuerung realisiert. Unabhängig davon sind weitere Maßnahmen zur Bearbeitung des gebildeten Signals PE1 möglich, was durch eine weitere unterbrochen gezeichnete Funktionseinheit angedeutet ist.

Der zweite Überwachungskanal UK2 hingegen ist mit Hilfe des Antriebs-Rechners A-CPU realisiert. Dazu ist eine Datenverbindung D vorgesehen, über welche die gebildeten Eingangssignale PE2 des Rechners PLC-CPU zum Antriebs-Rechner A-CPU übertragen werden können. Die beiden Überwachungskanäle UK1 und UK2 können ebenfalls durch eine geeignete Programmierung der beteiligten Rechner NC-CPU und A-CPU realisiert werden, indem beispielsweise Abfragen auf Signaländerungen oder aber auch statistische Maßnahmen zur Plausibilitätsüberprüfung von aufeinanderfolgenden eingehenden Werten getroffen werden. Die genaue Ausgestaltung der Überwachungskanäle UK1 und UK2 hängt somit vom konkreten Anwendungsfall bzw. Prozeß P ab.

Auch zwischen den beiden Rechnern NC-CPU und A-CPU, welche je einen Überwachungskanal UK1 und UK2 beinhalten, sind über eine weitere Funktionseinheit K2 Maßnahmen zum kreuzweisen Ergebnisvergleich und Datenvergleich getroffen. Die Funktionalität entspricht der der Funktionseinheit K1.

In Abhängigkeit vom Ergebnis im Überwachungskanal UK1 und UK2 werden jeweils Ausgangssignale PA1 und PA2 unabhängig voneinander erzeugt, welche Maßnahmen zur Reaktion auf sicherheitsrelevante Veränderungen der Eingangssignale Pein beinhalten. Diese Ausgangssignale PA1 und PA2 werden ebenfalls einer Signalverarbeitung unterzogen. Dafür sind wiederum in beiden Rechnern NC-CPU und PLC-CPU der numerischen Steuerung Ausgangssignalverarbeitungseinheiten ASV1 und ASV2 vorgesehen. Diese können ebenfalls, wie die Eingangssignalverarbeitungseinheiten ESV1 und ESV2, in Form einer geeigneten Programmierung der beteiligten Rechner bestehen. Desweiteren können somit die Maßnahmen zur Signalverarbeitung der Ausgangssignale in dem gleichen Rechner durchgeführt werden wie auch die zugehörigen Maßnahmen zur Eingangssignalverarbeitung.

Auch bezüglich der Ausgangssignalverarbeitungseinheiten ASV1 und ASV2 erfolgt über die Funktionseinheit K1 ein kreuzweiser Ergebnisvergleich und Datenvergleich zwischen den beiden beteiligten Rechnern NC-CPU und PLC-CPU. Die so generierten signalverarbeiteten Ausgangssignale werden wiederum über die Eingangs-/Ausgangsbaugruppen EA1 und EA2 unabhängig voneinander ausgegeben. Dazu werden die Ausgangssignale Paus dem Prozeß P zugeführt, wo sie sicherheitsrelevante Parameter des Prozesses P redundant ansteuern und somit im Fehlerfall bzw. bei einer sicherheitsrelevanten Veränderung der Eingangssignale entsprechende Schutzmechanismen auslösen, welche eine Gefährdung im technischen Prozeß P verhindern. Solche Maßnahmen können in einem "sicheren Halt" bzw. "sicheren Betriebshalt", einer "sicheren Geschwindigkeitsüberwachung", einer "sicheren Endschaltüberwachung" oder "sicheren Nocken" bestehen.

Damit ist eine sichere Auswahl von integrierten sicherheitsrelevanten Überwachungen aus dem Prozeß P, eine sichere Ausgabe der Zustände der integrierten sicherheitsrelevanten Überwachungen und eine Weitergabe an den Prozeß P sowie eine Integration von Schaltkreisen durch eine mehrkanalige Verarbeitungs-/Verknüpfungslogik realisierbar. Die heute extern adaptierten Überwachungsgeräte und Sicherheitsschaltkreise, welche mit jeder Maschinenausrüstung notwendig sind, werden stark eingeschränkt bzw. können ganz entfallen. Mit der Umsetzung von Sicherheitstechnik in vorhandenen Hardwarekomponenten und über eine geeignete Programmierung dieser Hardwarekomponenten ergeben sich wirtschaftliche Vorteile. Der Aufwand für die Inbetriebnahme, den Test und die Abnahme sind für eine Serienmaschine zum Großteil nur noch ein einziges Mal durchzuführen. Es ist nicht mehr notwendig, z.B. jeden Schaltschrank aufs Neue mit Sicherheitsschaltkreisen auszustatten, zu verdrahten und zu testen. Dadurch gewinnt der Personenschutz in der Summe an Gewicht, da er wirtschaftlicher und technisch einfacher realisierbar ist.

Sichere Überwachung wie sicherer Betriebshalt, sichere Drehzahl-, Geschwindigkeits-, Beschleunigungs- und Endlagenüberwachung, sichere Nocken, sichere Druck- oder Ziehkraftüberwachung oder dergleichen werden durch die Integration über sicherheitsgerichtete Eingangs- und Ausgangssignale Pein und Paus vom Anwender aus dem Prozeß heraus sicher aktiviert, deaktiviert oder abgeschaltet und die Zustände wieder an den Prozeß sicher zurückgegeben.

Dies soll anhand eines Beispiels erläutert werden:
Die Haube einer CNC-Drehmaschine soll gegen das Zerbersten eines losgerissenen Teiles schützen. Um die Dicke der Haube zu begrenzen, wird auf eine Maximaldrehzahl der Spindel begrenzt. Will der Anwender die Haube teilweise öffnen, um Fließspähne zu entfernen oder komplett öffnen, um das Teil zu vermessen, so ist die Drehzahl der Spindel auf die maximal mögliche "Einrichtedrehzahl" (beispielsweise 50 U/min) oder aber auf "sicheren Betriebshalt" zu überwachen. Dazu wird die Spindel mit dem Einschalten der Werkzeugmaschine auf "sicheren Betriebshalt" überwacht. Erst wenn die Voraussetzungen für den automatisierten Produktionsbetrieb erfüllt werden, beispielsweise auch die Schutzhaube geschlossen wurde, wird aus dem Prozeß heraus (z.B. melden Sensoren, daß die Haube zu ist bzw. daß alles in Ordnung ist) auf die Überwachung auf die Maximaldrehzahl umgeschaltet. Über eine Taste "Anwahlhaube auf zum Späne entfernen" wird auf die Überwachung "Einrichtedrehzahl 50 U/min" umgeschaltet. Wenn die notwendigen Voraussetzungen erfüllt sind, (z.B. reduzierte Spindeldrehzahl und reduzierte oder im sicheren Betriebshalt sicher überwachte Achsen-Spindel und ausgeschaltete Kühlmittelpumpen etc.) wird die Türentriegelung angesteuert, so daß der Bediener die Haube zum Entfernen der Späne teilweise öffnen kann.

Dies wird entsprechend der gemäß der Darstellung nach FIG 1 gezeigten Schaltungsanordnung realisiert, indem die Überwachungen in den beiden Kanälen UK1 des Rechners NC-CPU und UK2 des Rechners A-CPU für jede Achse bzw. Spindel sicher vorgenommen werden. Dabei ist die Eingangssignalverarbeitung ESV1 und ESV2 sowie die Ausgangssignalverarbeitung ASV1 bzw. ASV2 vom Anwender frei projektierbar. Dies kann beispielsweise durch eine individuelle Programmierung der beteiligten Rechner NC-CPU und PLC-CPU geschehen. So ist beispielsweise die Signalverarbeitung im NC-Rechner NC-CPU in Form der Eingangssignalverarbeitung ESV1 bzw. Ausgangssignalverarbeitung ASV1 für den Anwender über beispielsweise Maschinendaten projektierbar, wodurch eine flexible Anpassung an die Applikation bzw. den zugrundeliegenden Prozeß P möglich wird. Dabei können zur Anwahl bzw. Abwahl oder Umschaltung der sicheren Überwachungen die Prozeßeingänge auf die je Achse bzw. Spindel vorhandenen sicherheitsgerichteten Eingänge des NC-Rechners NC-CPU verteilt werden. Dafür kann beispielsweise die Eingabe-/Ausgabeeinheit EA1 mehrere sicherheitsgerichtete Eingänge zur Beaufschlagung mit sicherheitsgerichteten Prozeßeingangssignalen Pein aufweisen. Zur weiteren Verarbeitung im Prozeß P kann der je Achse bzw. Spindel an den sicherheitsgerichteten Ausgängen des Eingangs-/Ausgangsbausteins EA1 des NC-Rechners anliegende Zustand der sicheren Überwachungen gesammelt auf einen einzelnen Prozeßausgang gelegt werden. Die Projektierung über Maschinendaten erlaubt eine Transformation der technologischen Sicht auf die axial angelegten Überwachungen. Dies wird für die sicherheitsgerichteten Eingänge über einen Verteiler- und für die sicherheitsgerichteten Ausgänge über einen Sammlermechanismus ermöglicht. Das soll anhand eines weiteren Beispiels verdeutlicht werden:

Durch eine Haube an einer Drehmaschine wird der Arbeitsraum eines Kreuzschlittens und einer Spindel verschlossen. Will der Maschinenbediener die Haube öffnen, so muß sichergestellt sein, daß beide Achsen des Kreuzschlittens und die Spindel sicher überwacht werden. Dazu wird eine Taste "Schutzhaube öffnen" als Eingang sowohl in den PLC-Rechner, als auch in den NC-Rechner geführt. In beiden Kanälen wird der Eingangspegel an die betroffenen Achs- und Spindelüberwachungskanäle, also auf die beiden Achsen und die Spindel verteilt. Jeder Überwachungskanal meldet getrennt den Zustand "Überwachung aktiv". Erst wenn alle drei Ausgänge den Zustand "Überwachung aktiv" melden, kann der Türentriegelungsmagnet angesteuert werden und dem Bediener ermöglicht werden, die Haube zu öffnen. D.h., die drei sicherheitsgerichteten Ausgänge "Überwachung aktiv" werden zyklisch UND-verknüpft (Sammlermechanismus) und das Verknüpfungsergebnis auf einen einzelnen Prozeßausgang Paus gegeben.

Alternativ ist es möglich, beispielsweise in die Signalverarbeitung des NC-Rechners NC-CPU eine vom Anwender erstellte eigene Signalverarbeitung einzubringen, welche interpretiert bzw. abgearbeitet wird. Um die Sicherheitskategorie einer "Einfehlersicherheit" zu erreichen, müssen dabei vom Anwender bestimmte Projektierungsvorschriften eingehalten werden. Dies sind beispielsweise ein möglichst identischer Aufbau der beiden Rechner NC-CPU und PLC-CPU der numerischen Steuerung S sowie eine identische Realisierung der in den beiden Rechnern realisierten Eingangssignalverarbeitung und Ausgangssignalverarbeitung. Außerdem muß die Realisierung ein Aufdecken schlafender Fehler in beiden Kanälen UK1 und UK2 gewährleisten. Dies kann beispielsweise durch ein gegenseitiges Vergleichen von Daten und Ergebnissen erfolgen, wie es durch die Funktionseinheit K1 realisiert ist.

## Patentansprüche

1. Verfahren zum sicheren Verarbeiten von sicherheitsgerichteten Prozeßsignalen, mit folgenden Verfahrensschritten:
1.1 die Prozeßsignale (Pein) werden unabhängig an mindestens zwei ebenfalls unabhängige Rechner (NC-CPU,PLC-CPU) geführt, welche so mindestens zwei Überwachungskanäle bilden,
1.2 in mindestens zwei Rechnern (NC-CPU,PLC-CPU) werden die Prozeßsignale (Pein) einer separaten projektierbaren Eingangssignalverarbeitung (ESV1,ESV2) unterzogen, wobei diese Rechner (NC-CPU,PLC-CPU) einen kreuzweisen Ergebnisvergleich und Datenvergleich durchführen, wobei unter dem Begriff "projektierbar" hier und im folgenden Wortlaut der Ansprüche eine flexible Anpaßtbarkeit und die jeweilige Applikation bzw. den jeweils zugrundeliegenden Prozeß (P) durch individuelle Programmierung der beteiligten Rechner (NC-CPU,PLC-CPU) subsummiert ist,
1.3 die durch die Eingangssignalverarbeitung (ESV1,ESV2) gebildeten Signale (PE1,PE2) werden in den Überwachungskanälen (UK1,UK2) interpretiert und den jeweiligen Prozeßzustand berücksichtigende Ausgangssignale (PA1,PA2) werden generiert, wobei zwischen jeweils zwei Überwachungskanälen ein kreuzweiser Ergebnisvergleich und Datenvergleich durchgeführt wird,
1.4 in mindestens zwei Rechnern (NC-CPU,PLC-CPU) werden die generierten Ausgangssignale (PA1,PA2) einer separaten projektierbaren Ausgangssignalverarbeitung unterzogen, wobei diese Rechner (NC-CPU,PLC-CPU) ebenfalls einen kreuzweisen Ergebnisvergleich und Datenvergleich durchführen,
1.5 mit den erhaltenen sicheren Ausgangssignalen der mindestens zwei Überwachungskanäle werden sicherheitsrelevante Parameter des Prozesses (P) redundant angesteuert.

2. Verfahren nach Anspruch 1, mit folgendem weiteren Verfahrensschritt:
2.1 die projektierbare Eingangs- und Ausgangssignalverarbeitung wird jeweils in einem gemeinsamen Rechner durchgeführt.

3. Verfahren nach Anspruch 1 oder 2 zum sicheren Verarbeiten von sicherheitsgerichteten Prozeßsignalen in numerisch gesteuerten Werkzeugmaschinen, Robotern oder dergleichen, mit folgenden Verfahrensschritten:
3.1 die Prozeßsignale (Pein) werden unabhängig zweikanalig an zwei ebenfalls unabhängige Rechner (NC-CPU,PLC-CPU) der numerischen Steuerung (S) geführt,
3.2 in beiden Rechnern (NC-CPU,PLC-CPU) werden die Prozeßsignale (Pein) einer separaten projektierbaren Eingangssignalverarbeitung (ESV1, ESV2) unterzogen, wobei diese Rechner (NC-CPU,PLC-CPU) einen kreuzweisen Ergebnisvergleich und Datenvergleich durchführen,
3.3 die durch die Eingangssignalverarbeitung (ESV1,ESV2) gebildeten Signale (PE1,PE2) werden in zwei unabhängigen Überwachungskanälen (UK1,UK2) interpretiert, welche jeweils durch einen Rechner (NC-CPU) der numerischen Steuerung (S) und den Rechner (A-CPU) eines am Prozeß (P) beteiligten Antriebes (A) gebildet werden, wobei eine Datenverbindung (D) zwischen dem anderen Rechner (PLC-CPU) der numerischen Steuerung (S) und dem Rechner (A-CPU) des Antriebes (A) besteht.
3.4 zwischen den beiden Überwachungskanälen (UK1,UK2) wird ein kreuzweiser Ergebnisvergleich und Datenvergleich durchgeführt und den jeweiligen Prozeßzustand berücksichtigende Ausgangssignale (PA1,PA2) werden generiert,
3.5 in den beiden Rechnern (NC-CPU,PLC-CPU) der numerischen Steuerung (S) werden die generierten Ausgangssignale (PA1, PA2) einer separaten projektierbaren Ausgangssignalverarbeitung (ASV1,ASV2) unterzogen, wobei diese beiden Rechner (NC-CPU,PLC-CPU) ebenfalls einen kreuzweisen Ergebnisvergleich und Datenvergleich durchführen,
3.6 mit den erhaltenen sicheren Ausgangssignalen (Paus) der zwei Überwachungskanäle (UK1,UK2) werden sicherheitsrelevante Parameter des Prozesses (P) redundant angesteuert.

4. Schaltungsanordnung zum sicheren Verarbeiten von sicherheitsgerichteten Prozeßsignalen, mit folgenden Merkmalen:
4.1 es sind mindestens zwei Rechner (NC-CPU,PLC-CPU) vorgesehen, welchen die Prozeßsignale (Pein) zuführbar sind und welche mindestens zwei Überwachungskanäle bilden,
4.2 in mindestens zwei Rechnern (NC-CPU,PLC-CPU) sind separate projektierbare Eingangssignalverarbeitungseinheiten (ESV1,ESV2) für die Prozeßsignale (Pein) vorgesehen, wobei zwischen diesen Rechnern (NC-CPU,PLC-CPU) Mittel (K1) zur Durchführung eines kreuzweisen Ergebnisvergleichs und Datenvergleichs vorgesehen sind,
4.3 die durch die Eingangssignalverarbeitungseinheiten (ESV1,ESV2) gebildeten Signale (PE1, PE2) sind in den Überwachungskanälen interpretierbar und es sind Mittel (K2) zur Generierung von den jeweiligen Prozeßzustand berücksichtigenden Ausgangssignalen (PA1, PA2) vorgesehen, wobei zwischen jeweils zwei Überwachungskanälen ebenfalls Mittel (K1) zur Durchführung eines kreuzweisen Ergebnisvergleichs und Datenvergleichs vorgesehen sind,
4.4 in mindestens zwei Rechnern (NC-CPU,PLC-CPU) sind separate projektierbare Ausgangssignalverarbeitungseinheiten (ASV1,ASV2) zur Verarbeitung der generierten Ausgangssignale (PA1, PA2) vorgesehen, wobei zwischen diesen Rechnern (NC-CPU,PLC-CPU) ebenfalls Mittel (K1) zur Durchführung eines kreuzweisen Ergebnisvergleichs und Datenvergleichs vorgesehen sind,
4.5 es sind Mittel (EA1,EA2) zur redundanten Ansteuerung sicherheitsrelevanter Parameter des Prozesses (P) mit den erhaltenen sicheren Ausgangssignalen der mindestens zwei Überwachungskanäle (UK1,UK2) vorgesehen.

5. Schaltungsanordnung nach Anspruch 4, mit folgendem weiteren Merkmal:
5.1 die projektierbaren Eingangs- und Ausgangssignalverarbeitungseinheiten sind jeweils in einem gemeinsamen Rechner angeordnet.

6. Schaltungsanordnung nach Anspruch 4 oder 5 zum sicheren Verarbeiten von sicherheitsgerichteten Prozeßsignalen in numerisch gesteuerten Werkzeugmaschinen, Robotern oder dergleichen, mit folgenden Merkmalen:
6.1 es sind zwei unabhängige Rechner (NC-CPU,PLC-CPU) der numerischen Steuerung (S) vorgesehen, denen die Prozeßsignale (Pein) unabhängig zweikanalig zuführbar sind,
6.2 in beiden Rechnern (NC-CPU,PLC-CPU) zur Verarbeitung der Prozeßsignale (Pein) sind separate projektierbare Eingangssignalverarbeitungseinheiten (ESV1, ESV2) vorgesehen, wobei zwischen diesen beiden Rechnern (NC-CPU,PLC-CPU) weitere Mittel (K1) zur Durchführung eines kreuzweisen Ergebnisvergleichs und Datenvergleichs vorgesehen sind,
6.3 die durch die Eingangssignalverarbeitungseinheiten (ESV1, ESV2) gebildeten Signale (PE1,PE2) sind in zwei unabhängigen Überwachungskanälen (UK1,UK2) interpretierbar, welche jeweils durch einen Rechner (NC-CPU) der numerischen Steuerung (S) und den Rechner (A-CPU) eines am Prozeß (P) beteiligten Antriebes (A) realisiert sind, wobei eine Datenverbindung (D) zwischen dem anderen Rechner (PLC-CPU) der numerischen Steuerung (S) und dem Rechner (A-CPU) des Antriebes (A) vorgesehen ist.
6.4 es sind Mittel (K2) zur Durchführung eines kreuzweisen Ergebnisvergleichs und Datenvergleichs zwischen den beiden Überwachungskanälen (UK1, UK2) und Mittel zur Generierung von den jeweiligen Prozeßzustand berücksichtigenden Ausgangssignalen (PA1,PA2) vorgesehen,
6.5 in den beiden Rechnern (NC-CPU,PLC-CPU) der numerischen Steuerung (S) sind zur Verarbeitung der generierten Ausgangssignale (Pa1,PA2) separate projektierbare Ausgangssignalverarbeitungseinheiten (ASV1,ASV2) vorgesehen,
wobei zwischen beiden Rechnern (NC-CPU,PLC-CPU) ebenfalls Mittel (K1) zur Durchführung einen kreuzweisen Ergebnisvergleichs und Datenvergleichs vorgesehen sind,
6.6 es sind Mittel (EA1,EA2) zur redundanten Ansteuerung sicherheitsrelevanter Parameter des Prozesses (P) mit den erhaltenen sicheren Ausgangssignalen (Paus) der zwei Überwachungskanäle (UK1,UK2) vorgesehen.

## Claims

1. Method for secure processing of safety-oriented process signals, comprising the following procedural steps:
1.1 the process signals (Pin) are independently fed to at least two also independent computers (NC-CPU, PLC-CPU) which thus form at least two monitoring channels,
1.2 in at least two computers (NC-CPU, PLC-CPU), the process signals (Pin) undergo separate, user-configurable input signal processing (ESV1, ESV2), said computers (NC-CPU, PLC-CPU) performing a crosswise comparison of results and of data, and the term "user-configurable" signifying, both here and in the following wording of the claims, flexible adaptability to the application in hand and to the particular underlying process (P) by means of individual programming of the participating computers (NC-CPU, PLC-CPU),
1.3 the signals (PE1, PE2) formed in the input signal processing operation (ESV1, ESV2) are interpreted in the monitoring channels (UK1, UK2), and output signals (PA1, PA2) taking account of the process state existing at the time are generated, a crosswise comparison of results and data being carried out between two monitoring channels in each case,
1.4 in at least two computers (NC-CPU, PLC-CPU) the generated output signals (PA1, PA2) undergo separate, user-configurable output signal processing, said computers (NC-CPU, PLC-CPU) also performing a crosswise comparison of results and data,
1.5 the secure output signals thus obtained from at least two monitoring channels are used to control safety-related parameters of the process (P) in redundant fashion.

2. Method in accordance with Claim 1, comprising the following additional procedural step:
2.1 the user-configurable input and output signal processing is in each case performed in a common computer.

3. Method in accordance with Claim 1 or Claim 2 for secure processing of safety-oriented process signals in numerically controlled machine tools, robots, or similar, comprising the following procedural steps:
3.1 the process signals (Pin) are fed independently in two-channel format to two also independent computers (NC-CPU, PLC-CPU) in the numerical controller (S),
3.2 in both computers (NC-CPU, PLC-CPU), the process signals (Pin) undergo separate user-configurable input signal processing (ESV1, ESV2), the computers (NC-CPU, PLC-CPU) performing a crosswise comparison of results and data,
3.3 the signals (PE1, PE2) formed by the input signal processing operation (ESV1, ESV2) are interpreted in two independent monitoring channels (UK1, UK2) which are formed by one computer (NC-CPU) from the numerical controller (S) and respectively by the computer (A-CPU) from a drive (A) participating in the process (P), with a data connection (D) existing between the other computer (PLC-CPU) of the numerical controller (S) and the computer (A-CPU) from the drive (A),
3.4 a crosswise comparison of results and data between the two monitoring channels (UK1, UK2) is performed, and output signals (PA1, PA2) taking account of the process state existing at the time are generated,
3.5 in the two computers (NC-CPU, PLC-CPU) of the numerical controller (S), the generated output signals (PA1, PA2) undergo a separate, user-configurable output signal processing operation (ASV1, ASV2), with these two computers (NC-CPU, PLC-CPU) also performing a crosswise comparison of results and data,
3.6 the secure output signals (Pout) obtained from the two monitoring channels (UK1, UK2) are used to control safety-related parameters of the process (P) in redundant fashion.

4. Circuit arrangement for secure processing of safety-oriented process signals, having the following characteristics:
4.1 at least two computers (NC-CPU, PLC-CPU) are provided, to which the process signals (Pin) can be fed and which form at least two monitoring channels,
4.2 in at least two computers (NC-CPU, PLC-CPU), separate user-configurable input signal processing units (ESV1, ESV2) for the process signals (Pin) are provided, with means (K1) being provided between these computers (NC-CPU, PLC-CPU) to perform crosswise comparison of results and data,
4.3 the signals (PE1, PE2) produced by the input signal processing units (ESV1, ESV2) can be interpreted in the monitoring channels and means (K2) are provided for generating output signals (PA1, PA2) which take account of the process state existing at the time, with means (K1) also being provided between two monitoring channels in each case to perform a crosswise comparison of results and data,
4.4 in at least two computers (NC-CPU, PLC-CPU), separate user-configurable output signal processing units (ASV1 ASV2) for processing the generated output signals (PA1, PA2) are provided, with means (K1) also being provided between these computers (NC-CPU, PLC-CPU) to perform a crosswise comparison of results and data,
4.5 means (EA1, EA2) are provided for redundant control of the safety-related parameters of the process (P) by means of the secure output signals obtained from the at least two monitoring channels (UK1, UK2).

5. Circuit arrangement in accordance with Claim 4, having the following additional characteristic:
5.1 the user-configurable input and output signal processing units are in each case arranged in a common computer.

6. Circuit arrangement in accordance with Claim 4 or 5 for secure processing of safety-oriented process signals in numerically controlled machine tools, robots, or similar, having the following characteristics:
6.1 in the numerical controller (S), two independent computers (NC-CPU, PLC-CPU) are provided to which the process signals (Pin) can be fed independently in two-channel format,
6.2 in the two computers (NC-CPU, PLC-CPU) for processing the process signals (Pin), separate user-configurable input signal processing units (ESV1, ESV2) are provided, with further means (K1) being provided between these two computers (NC-CPU, PLC-CPU) for performing a crosswise comparison of results and data,
6.3 the signals (PE1, PE2) produced by the input signal processing units (ESV1, ESV2) can be interpreted in two independent monitoring channels (UK1, UK2), which are realised by one computer (NC-CPU) from the numerical controller (S) and respectively by the computer (A-CPU) from a drive (A) participating in the process, with a data link (D) being provided between the other computer (PLC-CPU) from the numerical controller (S) and the computer (A-CPU) from the drive (A),
6.4 means (K2) are provided for performing a crosswise comparison of results and data between the two monitoring channels (UK1, UK2), and means are provided for generating output signals (PA1, PA2) which take account of the process status existing at the time,
6.5 in the two computers (NC-CPU, PLC-CPU) of the numerical controller (S), separate user-configurable output signal processing units (ASV1, ASV2) for processing the generated output signals (PA1, PA2) are provided, with means (K1) for performing a crosswise comparison of results and data also being provided between the two computers (NC-CPU, PLC-CPU),
6.6 means (EA1, EA2) are provided for redundant control of safety-related parameters of the process (P) by means of the secure output signals (Pout) obtained from the two monitoring channels (UK1, UK2).

## Revendications

1. Procédé pour traiter de manière sûre, des signaux opératoires destinés à la sécurité comprenant les stades suivants de procédé:
1.1 les signaux (Pein) opératoires sont envoyés indépendamment à au moins deux ordinateurs (NC-CPU, PLC-CPU) également indépendants, qui forment ainsi au moins deux canaux de surveillance,
1.2 dans au moins deux ordinateurs (NC-CPU, PLC-CPU), les signaux (Pein) opératoires sont soumis à un traitement (ESV1, ESV2) de signaux d'entrée distincts pouvant être projeté, ces ordinateurs (NC-CPU, PLC-CPU) effectuant une comparaison en croix des résultats et une comparaison des données l'expression "pouvant être projeté" signifiant ici et dans le reste de la revendication, une possibilité souple d'adaptation et l'application respective respectivement à l'opération (P) respective de base par programmation individuelle de l'ordinateur (NC-CPU, PLC-CPU) concerné,
1.3 les signaux (PE1, PE2) formés par le traitement (ESV1, ESV2) de signaux d'entrée, sont interprétés dans les canaux (UK1, UK2) de surveillance et les signaux (PA1, PA2) de sortie, prenant en compte l'état opératoire respectif, sont engendrés, une comparaison en croix des résultats et une comparaison des données étant effectuées entre respectivement deux canaux de surveillance,
1.4 dans au moins deux ordinateurs (NC-CPU, PLC-CPU), les signaux (PA1, PA2) de sortie engendrés sont soumis à un traitement de signal de sortie distinct pouvant être projeté, ces ordinateurs (NC-CPU, PLC-CPU) effectuant également une comparaison en croix des résultats et une comparaison des données,
1.5 par les signaux de sortie sûrs qui sont obtenus des au moins deux canaux de surveillance, des paramètres de l'opération (P), qui sont pertinents pour la sécurité, sont commandés de manière redondante.

2. Procédé suivant la revendication 1, ayant le stade supplémentaire suivant de procédé :
2.1 le traitement des signaux d'entrée et de sortie qui peut être projeté est effectué respectivement dans un ordinateur commun.

3. Procédé suivant la revendication 1 ou 2, de traitement de manière sûre de signaux opératoires destinés à la sécurité dans des machines-outils à commande numérique, des robots ou analogues, ayant les stades suivants du procédé :
3.1 les signaux (Pein) opératoires sont envoyés indépendamment par deux canaux, à deux ordinateurs (NC-CPU, PLC-CPU) également indépendants de la commande (S) numérique,
3.2 dans les deux ordinateurs (NC-CPU, PLC-CPU), les signaux (Pein) opératoires sont soumis à un traitement (ESV1, ESV2) de signaux d'entrée séparés pouvant être projeté, ces ordinateurs (NC-CPU, PLC-CPU) effectuant une comparaison en croix des résultats et une comparaison des données,
3.3 les signaux (PE1, PE2) formés par le traitement (ESV1, ESV2) des signaux d'entrée, sont interprétés dans deux canaux (UK1, UK2) indépendants de surveillance, qui sont formés respectivement par un ordinateur (NC-CPU) de la commande (S) numérique et par l'ordinateur (A-CPU) d'un entraînement (A) participant à l'opération (P), une liaison (D) de données existant entre l'autre ordinateur (PLC-CPU) de la commande (S) numérique et l'ordinateur (A-CPU) de l'entraînement (A),
3.4 il est effectué entre les deux canaux (UK1, UK2) de surveillance une comparaison en croix des résultats et une comparaison des données, et il est engendré des signaux (PA1, PA2) de sortie, prenant en considération l'état opératoire respectif,
3.5 dans les deux ordinateurs (NC-CPU, PLC-CPU) de la commande (S) numérique, les signaux (PA1, PA2) de sortie qui sont engendrés sont soumis à un traitement (ASV1, ASV2) de signaux de sortie distincts qui peut être projeté, ces deux ordinateurs (NC-CPU, PLC-CPU) effectuant également une comparaison en croix des résultats et une comparaison des données,
3.6 par les signaux (Paus) sûrs ainsi obtenus des deux canaux (UK1, UK2) de surveillance, on commande de manière redondante les paramètres de l'opération (P), qui sont pertinents du point de vue de la sécurité.

4. Circuit de traitement sûr de signaux opératoires destinés à la sécurité, ayant les caractéristiques suivantes
4.1 il est prévu au moins deux ordinateurs (NC-CPU, PLC-CPU) auxquels les signaux (Pein) opératoires peuvent être envoyés et qui forment au moins deux canaux de surveillance,
4.2 dans au moins deux ordinateurs (NC-CPU, PLC-CPU), il est prévu des unités (ESV1, ESV2) distinctes, pouvant être projetées, de signaux d'entrée, pour les signaux (Pein) opératoires, des moyens (K1) pour effectuer une comparaison en croix des résultats et une comparaison des données étant prévus entre ces ordinateurs (NC-CPU, PLC-CPU),
4.3 les signaux (PE1, PE2) formés par les unités (ESV1, ESV2) de traitement de signaux d'entrée, peuvent être interprétés dans les canaux de surveillance, et il est prévu des moyens (K2) destinés à engendrer les signaux (PA1, PA2) de sortie prenant en compte l'état opératoire respectif, des moyens (K1) destinés à effectuer une comparaison en croix des résultats et une comparaison de données étant également prévus entre respectivement deux canaux de surveillance,
4.4 des unités (ASV1, ASV2) séparées, pouvant être projetées de traitement de signaux de sortie, destinées à traiter les signaux (PA1, PA2) de sortie engendrés, étant prévues dans au moins deux ordinateurs (NC-CPU, PLC-CPU), des moyens (K1) destinés à effectuer une comparaison en croix des résultats et une comparaison des données étant également prévus entre ces ordinateurs (NC-CPU, PLC-CPU),
4.5 il est prévu des moyens (EA1, EA2) destinés à commander de manière redondante des paramètres de l'opération (P), qui sont pertinents du point de vue de la sécurité, par les signaux de sortie sûrs qui sont obtenus des au moins deux canaux (UK1, UK2) de surveillance.

5. Circuit selon la revendication 4 ayant la caractéristique supplémentaire suivante :
5.1 les unités de traitement des signaux d'entrée et de sortie qui peuvent être projetées sont disposées respectivement dans un ordinateur commun.

6. Circuit selon la revendication 4 ou 5, destiné à traiter de manière sûre des signaux opératoires relatifs à la sécurité dans des machines-outils à commande numérique, des robots ou analogues, ayant les caractéristiques suivantes :
6.1 il est prévu au moins deux ordinateurs (NC-CPU, PLC-CPU) indépendants de la commande (S) numérique, auxquels les signaux (Pein) opératoires peuvent être envoyés indépendamment par deux canaux,
6.2 dans les deux ordinateurs (NC-CPU, PLC-CPU) de traitement des signaux (Pein) opératoires, il est prévu des unités (ESV1, ESV2) distinctes et pouvant être projetées de traitement de signaux d'entrée, des moyens (K1) destinés à effectuer une comparaison en croix des résultats et une comparaison des données étant prévus entre ces deux ordinateurs (NC-CPU, PLC-CPU),
6.3 les signaux (PE1, PE2) formés par les unités (ESV1, ESV2) de traitement de signaux d'entrée peuvent être interprétés dans deux canaux (UK1, UK2) indépendants de surveillance, qui sont réalisés respectivement par un ordinateur (NC-CPU) de la commande (S) numérique et par l'ordinateur (A-CPU) d'un entraînement (A) participant à l'opération (P), une liaison (D) de données étant prévue entre l'autre ordinateur (PLC-CPU) de la commande (S) numérique et l'ordinateur (A-CPU) de l'entraînement (A),
6.4 il est prévu des moyens (K2) destinés à effectuer une comparaison en croix des résultats et une comparaison des données, entre les deux canaux (UK1, UK2) de surveillance et des moyens destinés à engendrer les signaux (PA1, PA2) de sortie, prenant en compte l'état opératoire respectif,
6.5 dans les deux ordinateurs (NC-CPU, PLC-CPU) de la commande (S) numérique, il est prévu pour le traitement des signaux (PA1, PA2) de sortie qui sont engendrés, des unités (ASV1, ASV2) distinctes et pouvant être projetées de traitement des signaux, des moyens (K1) destinés à effectuer une comparaison en croix des résultats et une comparaison des données étant également prévus entre deux ordinateurs (NC-CPU, PLC-CPU),
6.6 il est prévu des moyens (EA1, EA2) de commande redondante de paramètres de l'opération (P), qui sont pertinents pour la sécurité, par les signaux (Paus) de sortie sûrs qui ont été obtenus des deux canaux (UK1, UK2) de surveillance.
